(19) Europäisches Patentamt
European Patent Office
Office européen des brevets

(11) **EP 3 611 737 B1**

(12) **EUROPEAN PATENT SPECIFICATION**

(45) Date of publication and mention
of the grant of the patent:
**21.09.2022 Bulletin 2022/38**

(21) Application number: **18784717.3**

(22) Date of filing: **22.01.2018**

(51) International Patent Classification (IPC):
*H01B 7/10* (2006.01)  *H01B 9/02* (2006.01)
*H01B 7/02* (2006.01)  *H01B 3/28* (2006.01)
*H01B 3/30* (2006.01)  *H01R 4/72* (2006.01)
*H02G 15/04* (2006.01)  *H02G 15/105* (2006.01)
*H02G 15/103* (2006.01)  *H02G 15/068* (2006.01)
*H02G 15/18* (2006.01)

(52) Cooperative Patent Classification (CPC):
**H02G 15/043; H01B 3/28; H01B 3/30;
H02G 15/103; H02G 15/105; H02G 15/1806;**
H02G 15/068

(86) International application number:
**PCT/KR2018/000943**

(87) International publication number:
**WO 2018/190497 (18.10.2018 Gazette 2018/42)**

(54) **JOINT BOX FOR ULTRA-HIGH VOLTAGE DIRECT CURRENT POWER CABLE, AND ULTRA-HIGH VOLTAGE DIRECT CURRENT POWER CABLE SYSTEM COMPRISING SAME**

VERBINDUNGSDOSE FÜR HOCHSPANNUNGSGLEICHSTROMKABEL UND DIESELBE UMFASSENDES HOCHSPANNUNGSGLEICHSTROMVERSORGUNGSKABELSYSTEM

BOÎTE DE JONCTION POUR CÂBLE D'ALIMENTATION EN COURANT CONTINU À ULTRA-HAUTE TENSION, ET SYSTÈME DE CÂBLE D'ALIMENTATION EN COURANT CONTINU À ULTRA-HAUTE TENSION LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2017 KR 20170046775
14.11.2017 KR 20170151534**

(43) Date of publication of application:
**19.02.2020 Bulletin 2020/08**

(73) Proprietor: **LS Cable & System Ltd.
Anyang-si, Gyeonggi-do 14119 (KR)**

(72) Inventors:
• **YUN, Ho Jung
Seoul 08803 (KR)**
• **KIM, Sung Yun
Daegu 42114 (KR)**

• **JUNG, Eui Hwan
Jincheon-gun
Chungcheongbuk-do 27844 (KR)**
• **KIM, Yoon Hyoung
Gyeongsangbuk-do 39171 (KR)**
• **HONG, Sung Pyo
Seoul 01044 (KR)**

(74) Representative: **advotec.
Patent- und Rechtsanwaltspartnerschaft
Tappe mbB
Widenmayerstraße 4
80538 München (DE)**

(56) References cited:
WO-A1-86/02210       WO-A1-2013/182829
JP-A- 2002 078 180    KR-A- 20150 115 470
KR-A- 20160 063 219   KR-A- 20160 063 219
KR-A- 20160 088 780   KR-A- 20160 088 780
US-B1- 6 303 870

**Description**

**TECHNICAL FIELD**

The present invention relates to a joint box for an ultra-high-voltage direct-current (DC) power cable and an ultra-high-voltage DC power cable system including the same. Specifically, the present invention relates to a joint box, for an ultra-high-voltage DC power cable, which is capable of alleviating an electric field in a region in which an electric field concentration occurs structurally to effectively prevent dielectric breakdown of the joint box due to a local electric-field concentration, and an ultra-high-voltage DC power cable system including the same.

**BACKGCIRCULAR ART**

An ultra-high-voltage power cable is a device that transmits power using an internal conductor, and may be classified into a high-voltage direct-current (DC) power cable and an ultra-high-voltage alternating-current (AC) power cable.

A DC transmission method using the ultra-high-voltage DC power cable is advantageous in terms of long-distance transmission due to low power loss and thus a long-distance transmission line is configured by forming an ultra-high-voltage DC power cable system by connecting such power cables to each other via a joint box.

In general, a power cable has a stack structure, in which a conductor, an inner semiconducting layer surrounding the conductor, an insulating layer surrounding the inner semiconducting layer and formed of a material such as crosslinked polyethylene (XLPE), an outer semiconducting layer surrounding the insulating layer, a metal shielding layer surrounding the outer semiconducting layer, and an outer cover protecting the internal components of the power cable from external shocks, pressure, and the like are sequentially stacked.

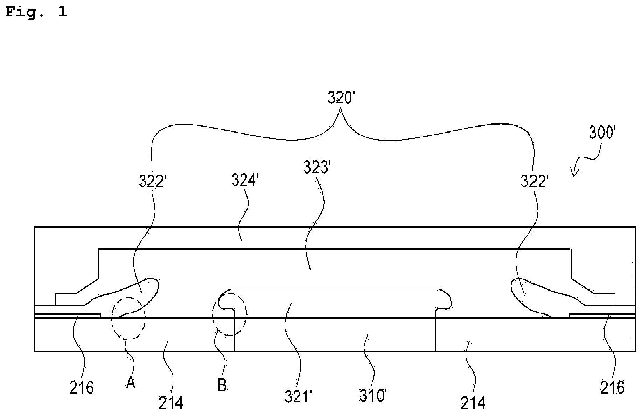

Ends of such power cable may be connected to each other via a joint box having a cross-sectional structure shown in FIG. 1.

As illustrated in FIG. 1, an ultra-high-voltage power cable system of a related art is manufactured by connecting a pair of power cables each including a conductor (not shown), an inner semiconducting layer (not shown), an insulating layer 214, and an outer semiconducting layer 216 via a joint box 300', such that ends of the power cables via which the conductors, the inner semiconducting layers, the insulating layers 214, and the outer semiconducting layers 216 are sequentially exposed face each other.

However, for transmission of direct current, a power cable system has resistive electric field distribution characteristics, in which an electric field distribution depends on volume resistivity. Specifically, in the joint box 300' of the related art for a power cable or a DC power cable, a region in which different materials are in contact with each other, e.g., an interface between a joint sleeves 320' and a power cable, which are structures formed of materials of different volume resistivities, meet together, a portion A of FIG. 1, indicated by a broken line, at which a second electrode 322', the insulating layer 214 of the power cable, and an insulating layer 323' of the joint box 300' meet together, or a portion B of FIG. 1, indicated by a broken line, at which a first electrode 321', the insulating layer 214 of the power cable, and the insulating layer 323' of the joint box 300' meet together, may be an insulation weak part due to problems such as a change of volume resistivity of each material according to a temperature change, voids occurring during the manufacture of the joint box 300', and the intrusion of foreign substances, and particularly, dielectric breakdown may occur structurally due to an electric field concentration.

Patent document KR 2016 0063219 A relates to an intermediate junction box for an ultra-high-voltage direct current power cable. Furthermore, patent document KR 2016 0088780 A relates to a joint sleeve and an intermediate connection structure.

Therefore, there is an urgent need for a joint box, for an ultra-high-voltage DC power cable, which is capable of effectively preventing dielectric breakdown due to a local electric field concentration by alleviating an electric field in a region in which an electric field concentration occurs structurally and reducing a heat generation phenomenon at connection parts; and an ultra-high-voltage DC power cable system including the same.

**DETAILED DESCRIPTION OF THE INVENTION**

**TECHNICAL PROBLEM**

The present invention is directed to providing a joint box, for a cable, which is capable of alleviating an electric field in a region in which an electric field is structurally concentrated to effectively prevent dielectric breakdown of the joint box due to a local electric-field concentration, and an ultra-high-voltage DC power cable system including the same.

## TECHNICAL SOLUTION

According to an aspect of the present invention, the present invention provides an ultra-high-voltage DC power cable system according to the subject matter of independent claim 1.

And a thickness of the first insulating layer may satisfy the following Equation (1):

[Equation 1]

$$\frac{1.85 U_O}{D_{PMJ}} < BDV_{PMJ}$$

And $U_o$ may represent a rated voltage of the joint box for an ultra-high-voltage DC power cable, and $1.85 U_o$ may represent a lightning impulse test voltage which may be a basic impulse insulation level (BIL), and $D_{PMJ}$ may represent a thickness of the first insulating layer on the first electrode, and $BDV_{PMJ}$ may represent a breakdown voltage of the first insulating layer.

And the second insulating layer may be formed to cover both the first electrode and the second electrode such that the first electrode and the second electrode are not contact in contact with the first insulating layer.

And a vertical distance of the second electrode from the innermost side of the joint sleeve may gradually increase toward the first electrode.

And the joint box may further comprise a joint-box shielding layer configured to shield an electric field leaking outside the joint box, the joint-box shielding layer being provided outside the joint sleeve; and a triple point at which he first insulating layer, the second insulating layer and the joint-box shielding layer are in contact with one another, wherein a distance between the first electrode and the triple point is greater than that between the first electrode and the second electrode.

And the first insulating layer and the second insulating layer each may have volume resistivity of $1 \times 10^{14}$ to $1 \times 10^{18}$ Qcm, and the volume resistivity of the second insulating layer may be ten times or more lower than that of the first insulating layer.

And the second insulating layer may be formed of a second insulating composition containing a base resin and a resistivity control additive.

And the base resin may comprise at least one type of rubber selected from the group consisting of liquid silicone rubber (LSR), fluororubber (FR), styrene-butadiene rubber (SBR), nitrile-butadiene rubber (NBR) and chloroprene rubber (CR).

And the resistivity control additive may comprise a glycol-based organic conductive filler.

And the glycol-based organic conductive filler may comprise polyglycol ether.

And an amount of the organic conductive filler may be 0.1 to 5% by weight, based on total weight of the insulating composition.

And the resistivity control additive may further comprise an inorganic conductive filler.

And a thickness of the first insulating layer satisfies the following Equation (1):

[Equation 1]

$$\frac{1.85 U_O}{D_{PMJ}} < BDV_{PMJ}$$

,

and $U_o$ may represent a rated voltage of the joint box for an ultra-high-voltage DC power cable, and $1.85 U_o$ may represent a lightning impulse test voltage which is a basic impulse insulation level (BIL), and $D_{PMJ}$ may represent s a thickness of the first insulating layer on the first electrode, and and $BDV_{PMJ}$ may represent a breakdown voltage of the first insulating layer.

And the second insulating layer may be formed to cover both the first electrode and the second electrode such that the first electrode and the second electrode are not contact in contact with the first insulating layer.

And a vertical distance of the second electrode from the innermost side of the joint sleeve gradually may increase toward the first electrode.

And the joint box may further comprise a joint-box shielding layer configured to shield an electric field leaking outside the joint box, the joint-box shielding layer being provided outside the joint sleeve; and a triple point at which he first insulating layer, the second insulating layer and the joint-box shielding layer are in contact with one another, wherein a distance between the first electrode and the triple point may be greater than that between the first electrode and the second electrode.

And the first insulating layer and the second insulating layer each may have volume resistivity of $1\times10^{14}$ to $1\times10^{18}$ Qcm, the volume resistivity of the second insulating layer may be ten times or more lower than those of the first insulating layer and the insulating layer of the cable, and the volume resistivity of the first insulating layer may be ten times or more higher than that of the insulating layer of the cable.

And a ratio between the volume resistivity of the insulating layer of the cable and the volume resistivity of the second insulating layer may be 20 or more.

And the second insulating layer may comprise a base resin and a resistivity control additive, wherein the base resin comprises at least one type of rubber selected from the group consisting of liquid silicone rubber (LSR), fluororubber (FR), styrene-butadiene rubber (SBR), nitrile-butadiene rubber (NBR) and chloroprene rubber (CR), and the resistivity control additive may comprise a glycol-based organic conductive filler.

And the glycol-based organic conductive filler may comprise polyglycol ether.

And an amount of the organic conductive filler may be 0.1 to 5% by weight, based on total weight of the insulating composition.

And the resistivity control additive may comprise an inorganic conductive filler.

## ADVANTAGEOUS EFFECTS

The present invention exhibits an excellent effect of effectively alleviating an electric field in a region in which electric field concentration occurs structurally to prevent dielectric breakdown of the joint box.

## DESCRIPTION OF THE DRAWINGS

FIG. 1 is a schematic cross-sectional view of a power cable system of a related art.

FIG. 2 is a schematic longitudinal sectional view of a DC power cable of an ultra-high-voltage direct-current (DC) power cable system according to the present invention.

FIG. 3 is a schematic cross-sectional view of an ultra-high-voltage DC power cable according to the present invention.

FIG. 4 is a graph showing an electric field analysis and Joule loss at a triple point.

FIG. 5 is a graph showing an equipotential line distribution between a first electrode and a second electrode in each example.

## MODE OF THE INVENTION

Hereinafter, exemplary embodiments of the present invention will be described in detail with reference to the accompanying drawings. Throughout the specification, the same reference numbers represent the same elements.

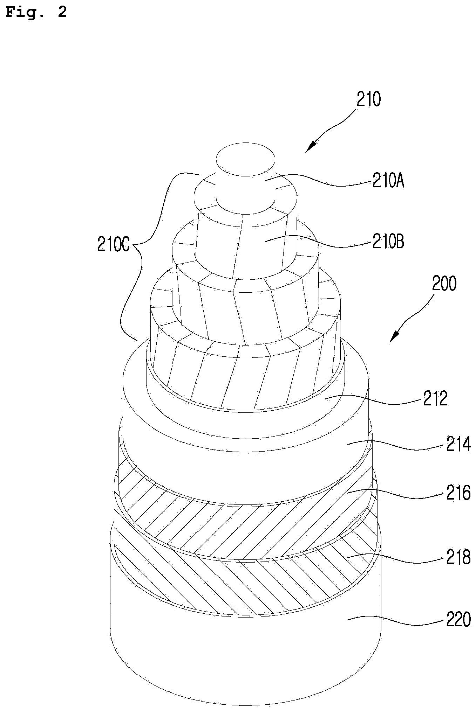

FIG. 2 is a schematic longitudinal sectional view of an ultra-high-voltage direct-current (DC) power cable of an ultra-high-voltage DC power cable system according to the present invention.

Referring to FIG. 2, an ultra-high voltage direct-current (DC) power cable 200 includes a core part which has a conductor 210, an inner semiconducting layer 212, an insulating layer 214, and an outer semiconducting layer 216, transmits electric power only in a lengthwise direction of the cable 200 and prevents leakage of current in a radial direction of the cable 200.

The conductor 210 acts as a path through which current flows to transmit power, and may be formed of a material, e.g., copper or aluminum, having high conductivity to minimize power loss and having strength and flexibility appropriate to manufacture and use a cable. The conductor 210 may be either a circularly compressed conductor manufactured by twisting a plurality of round strands and compressing the twisted round strands into a round shape or a flat conductor having a round cross-section and including a flat strand layer 210C consisting of a round center strand 210A and flat strands 210B twisted to surround the round center strand 210A. The flat conductor has a higher space factor than that of the circularly compressed conductor and thus an outer diameter of a cable may decrease when the flat conductor is used.

However, because the conductor 210 is formed by twisting a plurality of strands, a surface thereof is not smooth and thus an electric field may not be uniform and a corona discharge is likely to occur therein locally. In addition, when a gap occurs between the surface of the conductor 210 and the insulating layer 214 described later, insulation performance may decrease. In order to solve the above problems, the inner semiconducting layer 212 is formed outside the conductor 210.

The inner semiconducting layer 212 is formed by adding conductive particles, such as carbon black, carbon nanotubes, carbon nanoplates or graphite, to an insulating material and thus has semiconductivity, and prevents a sudden electric field change between the conductor 210 and the insulating layer 214 described later, thereby stabilizing insulation performance. In addition, the inner semiconducting layer 212 suppresses an uneven charge distribution on a surface of the conductor 210 to achieve a uniform electric field and prevents the occurrence of a gap between the conductor 210 and the insulating layer 214 to suppress a corona discharge, dielectric breakdown, etc.

The insulating layer 214 is provided outside the inner semiconducting layer 212 to electrically insulate the inner semiconducting layer 212 from the outside, thereby preventing current flowing through the conductor 210 from leaking to the outside. In general, a breakdown voltage of the insulating layer 214 should be high and insulation performance thereof should be stably maintained for a long time. Furthermore, the insulating layer 214 should have low dielectric loss and have heat resistance performance. Accordingly, the insulating layer 214 may be formed of a polyolefin resin such as polyethylene and polypropylene, and preferably, a polyethylene resin. Here, the polyethylene resin may be a cross-linked resin.

The outer semiconducting layer 216 is provided outside the insulating layer 214. Similar to the inner semiconducting layer 212, the outer semiconducting layer 216 is formed of a material having semiconductivity by adding conductive particles, such as carbon black, carbon nanotubes, carbon nanoplates, or graphite, to an insulating material, and suppresses a non-uniform charge distribution between the insulating layer 214 and a metal sheath 218 described later, thereby stabilizing insulation performance. In addition, the outer semiconducting layer 216 planarizes a surface of the insulating layer 214 of the cable to mitigate an electric field concentration so as to prevent a corona discharge, and physically protects the insulating layer 214.

The core part may further include a moisture absorbing part (not shown) to prevent moisture from penetrating the cable. The moisture absorbing part may be formed between the twisted strands and/or outside the conductor 210, and be in the form of powder, tape, a coating layer or a film containing a super absorbent polymer (SAP) capable of quickly absorbing moisture penetrating the cable and having excellent capability of maintaining a state of absorbing the moisture to prevent penetration of moisture in the lengthwise direction of the cable. In addition, the moisture absorbing part may have semiconductivity to prevent a sudden electric field change.

A protective sheath part is provided outside the core part. A power cable installed in an environment exposed to water, such as the seabed, further includes an outer cover part (not shown). The protective sheath part and the outer cover part protect the core part of the cable from various environmental factors, such as moisture penetration, mechanical trauma, and corrosion, which may affect power transmission performance of the cable.

The protective sheath part includes a metal sheath 218 and an inner sheath 220 to protect the cable from fault current, external forces or other external environmental factors.

The metal sheath layer 218 may be grounded at an end of the power cable to serve as a path through which fault current flows when an accident such as a ground fault or a short circuit occurs, protect the cable from external shocks, and prevent an electric field from being discharged to the outside of the cable. In addition, in the case of a cable installed in an environment such as the sea bottom, the metal sheath 218 may be formed to seal the core part to prevent degradation of insulation performance due to invasion of foreign substances such as moisture. For example, the metal sheath layer 218 may be formed to have seamless outer surfaces by extruding a molten metal outside the core part to enhance watertightness performance. The metal may be lead or aluminum, preferably, lead having excellent corrosion resistance to seawater, particularly in the case of a submarine cable, and more preferably, a lead alloy containing a metal element to supplement mechanical properties.

Furthermore, an anti-corrosion compound, e.g., blown asphalt, may be applied onto a surface of the metal sheath 218 to further improve corrosion resistance, watertightness, etc. of the cable and improve adhesion to the inner sheath 220. A nonwoven copper wire tape (not shown) and a moisture absorbing layer (not shown) may be additionally provided between the metal sheath 218 and the core part. The nonwoven copper wire tape includes copper wire, a nonwoven tape, and the like to facilitate electrical contact between the outer semiconducting layer 216 and the metal sheath layer 218. The moisture absorbing layer is in the form of powder, a tape, a coating layer or a film containing a super absorbent polymer (SAP) capable of quickly absorbing moisture penetrating into the cable and maintaining a state of absorbing the moisture to prevent penetration of moisture in a lengthwise direction of the cable. In addition, copper wire may be included in the water absorbing layer to prevent a sudden electric field change in the water absorbing layer.

The inner sheath 220 formed of a resin such as polyvinyl chloride (PVC) or polyethylene is provided outside the metal sheath 218 to improve corrosion resistance, watertightness, etc. of the cable and protect the cable from mechanical trauma and other external environmental factors such as heat and ultraviolet rays. In particular, a polyethylene resin having excellent watertightness is preferably used in the case of a power cable laid on the sea bottom, and a polyvinyl chloride resin is preferably used in an environment requiring flame retardancy.

The protective sheath part further includes a metal reinforcing layer (not shown) formed of galvanized steel tape or the like, a bedding layer (not shown) formed of semiconductive non-woven fabric tape and the like and provided on and/or below the metal reinforcement layer to buffer an external force applied to the power cable, and an external sheath (not shown) formed of a resin such as polyvinyl chloride or polyethylene so as to further improve corrosion resistance, watertightness, etc. of power cable and additionally protect the power cable from other external environmental factors such as mechanical trauma, heat, and ultraviolet rays.

A power cable laid on the sea bottom is easily damaged by the anchor of a ship, a bending force caused by sea currents or waves, friction with the sea bottom, and the like and thus the outer cover part may be provided outside the protective sheath part to prevent damage to the power cable.

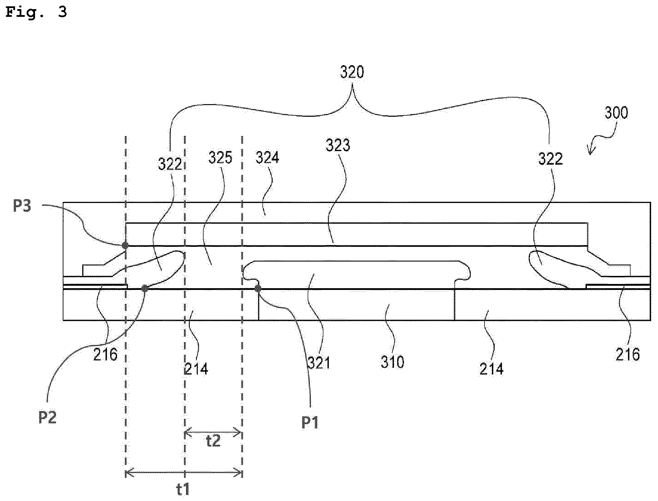

The outer cover part may include an armor layer (not shown) and a serving layer (not shown). The armor layer may be formed of steel, galvanized steel, copper, brass, bronze, or the like, and may be formed in at least one layer by cross-winding wire having a circular or flat cross section. The armor layer enhances mechanical properties and performance of the cable and additionally protects the cable from external forces. The serving layer formed of polypropylene yarn or the like is formed in one or more layers on and/or under the armor layer to protect the cable. The serving layer which is an outermost layer may be formed of two or more materials of different colors to secure visibility of the cable laid on the sea bottom. FIG. 3 is a schematic cross-sectional view of a joint box for an ultra-high-voltage DC power cable and an ultra-high-voltage DC power cable system including the same, according to an embodiment of the present invention.

Although not part of the claimed subject-matter, it is illustrated in FIG. 3, that an ultra-high-voltage power cable system may include a joint box 300 having a conductor connection part 310 configured to surround a pair of power cables and ends of conductors 210 and insulating layers 214 of the pair of power cables so as to electrically connect the conductors 210, and a joint sleeve 320 configured to surround outer sides of the ends of the conductor connection part 310 and the pair of power cables and formed of an elastic material that contracts at room temperature. The ultra-high-voltage power cable system may further include a joint-box shielding layer 324 provided outside the joint sleeve 320 and electrically connected to the outer semiconducting layers 216 and the metal sheaths 218 of the pair of power cables to serve as the outer semiconducting layer 216 of the power cable; a housing (not shown) formed of a metal casing to cover the joint sleeve 320, a waterproofing material (not shown) provided in a space between the housing and the joint sleeve 320, and the like.

As illustrated in FIG. 2, the pair of power cables each include a cable core having a conductor 210, an inner semiconducting layer 212 surrounding the conductor 210, an insulating layer 214 surrounding the inner semiconducting layer 212, and an outer semiconducting layer 216 surrounding the insulating layer 214, such that the conductor 210, the inner semiconducting layer 212, the insulating layer 214, and the outer semiconducting layer 216 are sequentially exposed via ends thereof and face each other.

The conductor connection part 310 may include a conductor fixing part configured to electrically connect and fix the pair of conductors 210 exposed at ends of the pair of power cables, and a connection sleeve configured to surround the conductor fixing part and the ends of the insulating layers 214 exposed at the ends of the pair of power cables . The conductor fixing part may be formed by inserting a sleeve into the pair of conductors 210 and compressing an outer circumferential surface of the sleeve, fixing the pair of conductors 210 inserted into the sleeve with bolts passing through the sleeve, or welding ends of the pair of conductors 210 together by welding. The conductors 210 or the conductor fixing part may be configured to be electrically connected to the connection sleeve via braided wire.

The joint sleeve 320 is formed of an elastic material that contracts at room temperature and provide in the form of a hollow sleeve with a through hole therein in a lengthwise direction, thereby a pair of cables electrically connected to each other by the conductor connection part 310, and particularly, the insulating layers 214, the outer semiconducting layers 216, and the conductor connection part 310 which are exposed at the ends of the pair of cables may be brought into close contact with each other due to an elastic restoring force. Furthermore, a joint-box insulation part is provided to prevent leakage of current to the outside of the joint box 300, and at least a portion of an innermost surface of the joint sleeve 320 may be the joint-box insulation part. Specifically, the joint-box insulation part may be brought into close contact with the conductor connection part due to an elastic restoring force.

The joint sleeve 320 may include a first electrode 321 electrically connected to the conductor connection parts 310 of the pair of power cables, and a pair of second electrodes 322 facing each other in the joint box 300 and electrically connected to the outer semiconducting layers 216 and the metal sheath 218 of the pair of power cables. The first electrode 321 and the second electrodes 322 may be surrounded by the joint-box insulation part.

An electric field may be evenly spread due to the first electrode 321 and the second electrodes 322 without being locally concentrated therebetween.

Specifically, the first electrode 321 has left and right round ends in the lengthwise direction of the power cable or the joint box, is formed of a semiconductive material, and is provided outside the conductor connection part 310 to be electrically connected to the conductor connection part 310 and the conductor 210, thereby serving as a so-called high-voltage electrode.

The pair of second electrodes 322 are formed of a conductive material, and preferably, the same material as the first electrode 321, face each other while being spaced a certain distance from the first electrode 321 to the left or right in the lengthwise direction of the power cable or the joint box, and are in contact with the outer semiconducting layer 216 of the power cable to be electrically connected thereto, thereby serving as a so-called shielding electrode (deflector). The pair of second electrodes 322 are provided, such that a vertical distance thereof from an innermost side of the joint sleeve 320 or the insulating layer 214 of the cable increases toward the first electrode 321, a rate of an increase of the vertical distance increases in a direction toward the first electrode 321, and surfaces thereof facing the first electrode 321 is curved.

Accordingly, the first electrode 321 and the second electrodes 322 have round or curved ends and thus an electric field distribution may be controlled using an equipotential line distribution between the first electrode 321 and the second electrodes 322 according to the shapes thereof.

The joint-box insulation part is provided to surround the first electrode 321 and the second electrodes 322 so as to prevent current flowing through the ultra-high-voltage cable system from leaking to the outside, thereby ensuring insulation performance.

In the case of an AC power cable system, electric fields in a cable insulating layer and a joint-box insulation part depend on the permittivities of the cable insulating layer and the joint-box insulation part, and the permittivities do not change greatly with temperature. Thus, it is easy to predict an electric field distribution and design a joint box. In contrast, in the case of a DC power cable system, electric fields distribution in a cable insulating layer and a joint-box insulation part depends on volume resistivities thereof, i.e., has a resistive electric-field distribution characteristics. Thus, a high electric field is applied to a portion of the system having high volume resistivity and the volume resistivity depends on temperature. Therefore, it is very difficult to design a joint box in consideration of an electric field distribution.

In particular, as in the joint box for a power cable according to the related art of FIG. 1, different types of materials of different volume resistivities are in contact with each other at interfaces between the first electrode 321' and the second electrode 322' and the joint-box insulation part 323' and/or the insulating layer 214 of the cable. Thus, when DC current flows through the power cable and thus a temperature change occurs, volume resistivity also changes and a rate of change thereof varies according to a material. Therefore, an electric field distribution is difficult to predict and a local electric field concentration may occur. Furthermore, during the manufacture of the power cable system, void may occur or foreign substance may permeate into the interfaces between the first electrode 321' and the second electrode 322' and the joint-box insulation part 323' and/or the insulating layer 214 of the cable. When a high electric field is applied to the interfaces at which void occurs or into which foreign substances permeate, dielectric breakdown may occur.

In order to solve the problems, the joint-box insulation part of the present invention includes a first insulating layer 323, and a second insulating layer 325 which is surrounded by the first insulating layer 323 and forms at least a portion of the innermost side of the joint sleeve 320.

To ensure insulation performance of the joint box, the first insulating layer 323 may be formed of a first insulating composition containing liquid silicone rubber (LSR), fluororubber (FR), styrene-butadiene rubber (SBR), nitrile-butadiene rubber (NBR), chloroprene rubber (CR), an ethylene propylene diene monomer (EPDM) rubber, or a combination thereof, and preferably, the LSR that is excellent in terms of long-term reliability, such as tearing strength and a permanent change rate, and can be produced at high speeds, thereby improving productivity. In addition, the LSR has various advantages, in that it can be molded in a variety of design products, thereby improving formability, is not necessary to be secondary vulcanized, and can be molded by double injection.

The second insulating layer 325 is formed in various forms, e.g., a tube, a coating layer, and a film, between the first insulating layer 323 and the insulating layer 214 of the cable, and particularly, is formed to at least partially surround at least one selected from the group consisting of the innermost side of the joint sleeve 320, the interface between the first electrode 321 and the joint-box insulation part, and the interface between the second electrode 322 and the joint-box insulation part, and preferably, an interface between the first electrode 321 or the second electrode 322 and the joint-box insulation part and/or the insulating layer 214 of the cable. Therefore, an electric field may be alleviated in a region in which an electric field concentration may occur due to a change of volume resistivity according to temperature or of which insulation performance may become unstable due to the occurrence of void or the intrusion of foreign substances, thereby suppressing dielectric breakdown from occurring in the joint box.

The second insulating layer 325 may be formed of a second insulating composition having lower volume resistivity than that of the insulating layer 214 of the cable, so that an electric field applied to a region in which dielectric breakdown may occur may be dispersed to a region of which insulation performance is relatively stable.

The second insulating composition may include a base resin and a resistivity control additive. The base resin may have volume resistivity of $10^{15}$ Qcm or less and dielectric strength of 10 kV/mm or more, and preferably have breaking strength of 10 N/mm or more and elongation of 200% or more. The base resin may be formed of, for example, liquid silicone rubber (LSR), fluororubber (FR), styrene-butadiene rubber (SBR), nitrile-butadiene rubber (NBR), chloroprene rubber (CR), ethylene propylene diene monomer (EPDM) rubber or a combination thereof, preferably, the LSR that is excellent in terms of long-term reliability, such as tearing strength and a permanent change rate, and can be produced at high speeds, thereby improving productivity, and more preferably, the same resin as the first insulating layer 323 for close contact with the first insulating layer 323.

The resistivity control additive may include an organic conductive filler alone or in combination with an inorganic conductive filler. The organic conductive filler is a glycol-based filler such as ethylene glycol and propylene glycol, and preferably, polyglycolther (PGE), in consideration of compatibility with the base resin and electrical and mechanical properties of the second insulating layer 325. The organic conductive filler may form a chemical crosslink with the base resin and thus additionally improve electrical and mechanical properties of the second insulating layer 325. In addition, the organic conductive filler can be more easily dispersed in the base resin than the inorganic conductive filler, thereby facilitating control of volume resistivity.

The second insulating composition and the second insulating layer 325 formed thereof have volume resistivity controlled accurately according to those of the insulating layer 214 and the first insulating layer 323 of the cable in contact with the second insulating layer 325, thereby effectively dispersing an electric field in a region in which an electric field concentration may occur.

Specifically, the second insulating composition may have volume resistivity which is less than or equal to maximum volume resistivity Rmax at 70 °C, defined by Equation 1 below. Thus, when connected to a DC power cable, the second insulating layer 325 formed of the second insulating composition may have optimal volume resistivity according to a temperature change according to a current conduction state of the cable and an electric field distribution change in the insulating layer 214, the first insulating layer 323 and the second insulating layer 325, caused by the temperature change, thereby maximizing an effect of alleviating an electric field in a region in which an electric field concentration may occur structurally.

[Equation 1]

$$R_{max}=f_{min}(aX,bY)$$

In Equation 1 above, $f_{min}(aX,bY)$ represents a minimum value of aX and bY, X represents volume resistivity at 70 °C of a cable insulating layer, Y represents volume resistivity at 70 °C of a first insulating layer, b is greater than or equal to 2a, b is in a range of 0.05 to 0.15, and a is in a range of 0.025 to 0.075.

When the volume resistivity of the second insulating composition exceeds maximum volume resistivity $R_{max}$ at 70 °C, defined by Equation 1 above, an electric field dispersion effect using the second insulating layer 325 formed of the second insulating composition is not sufficient and thus dielectric breakdown may occur in the joint box due to an electric field concentration.

For example, the amount of the resistivity control additive may be 0.1 to 5% by weight, and preferably, 0.5 to 3% by weight, based on the total weight of the second insulating composition, so that the second insulating composition may have the maximum volume resistivity Rmax at 70 °C, defined by Equation 1 above.

The volume resistivity of each of the first insulating layer 323, the second insulating layer 325 and the insulating layer 214 of the cable may be in a range of $1\times10^{12}$ to $1\times10^{18}$ Ωcm. The volume resistivity of the second insulating layer 325 may be ten times or more lower than those of the first insulating layer 323 and the insulating layer 214 of the cable. The volume resistivity of the first insulating layer 323 may not be ten times or more that of the insulating layer 214 of the cable. In particular, the volume resistivity of the insulating layer 214 of the cable may be in a range of $10^{14}$ to $10^{18}$ Ωcm, and the volume resistivity of the first insulating layer 323 may be in a range of $10^{14}$ to $10^{18}$ Ωcm. A ratio between the volume resistivity of the insulating layer 214 of the cable and the volume resistivity of the second insulating layer 325 may satisfy Equation 2 below, and a lower limit of a volume specific resistance of the second insulating layer 325 may be $10^{12}$ Ωcm.

[Equation 2]

(volume resistivity of cable insulating layer/volume resistivity of second insulating layer)≥20

When the volume resistivity of the second insulating layer 325 is not ten times or more lower than those of the first insulating layer 323 and the insulating layer 214 of the cable, the electric field dispersion effect of the second insulating layer 325 may significantly decrease. When the volume resistivity of the first insulating layer 323 is ten times or more higher than that of the insulating layer 214 of the cable, an excessively high electric field may be applied to the first insulating layer 323. When the volume resistivities of the insulating layer 214 of the cable and the first insulating layer 323 are not within the range, insulation characteristics required for transmission of ultra-high-voltage DC power may not be satisfied.

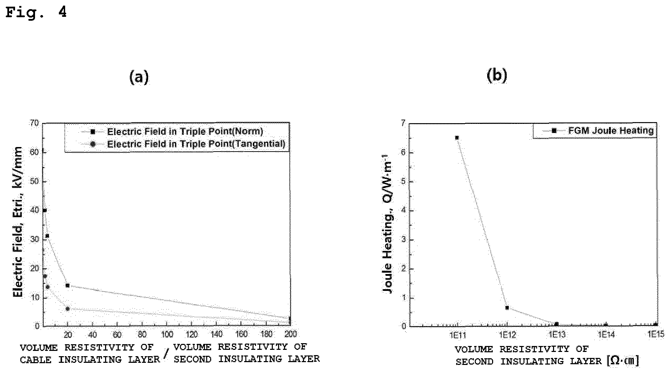

When the ratio between the volume resistivities of the insulating layer 214 of the cable and the second insulating layer 325 (i.e., volume resistivity of cable insulating layer/volume resistivity of second insulating layer) is less than 20, an electric field sharply increases at a triple point at which the second electrode 322, the second insulating layer 325 and the insulating layer 214 of the cable are in contact with one another as illustrated in FIG. 4(a). When the volume specific resistance of the second insulating layer 325 is less than the lower limit, an excessively large amount of heat is generated in the second insulating layer 325 due to Joule loss as illustrated in FIG. 4(b).

As described above, it is preferable that, in a joint box, for an ultra-high-voltage DC power cable, which includes the joint-box insulation part with the first insulating layer 323 and the second insulating layer 325 according to an embodiment of the present invention, and an ultra-high-voltage DC power cable system including the same, the interface between the first insulating layer 323 and the second insulating layer 325 are not in contact with the first electrode 321 and the second electrode 322.

Specifically, the first electrode 321 and the second electrode 322 may be surrounded by the second insulating layer 325 without being in contact with the first insulating layer 323, and the joint sleeve 320 may include a first triple point P1 at which the first electrode 321, the second insulating layer 325 and the insulating layer 214 of the cable are in contact with one another, a second triple point P2 at which the second electrode 322, the second insulating layer 325 and the insulating layer 214 of the cable are in contact with one another, and a third triple point P3 at which the joint-box shielding layer 324, the first insulating layer 323 and the second insulating layer 325 are in contact with one another.

In this case, an electric field acting on the first triple point and the second triple point is shifted to the first insulating layer 323 due to the difference between the volume resistivities of the second insulating layer 325 and the first insulating layer 323 according to resistive electric field distribution characteristics during transmission of DC current. When the power cable system is under a DC electric field, intervals between equipotential lines generated at the second insulating layer 325 may be increased at a relatively constant level due to the inorganic conductive filler evenly dispersed in the second insulating layer 325, thereby suppressing a local electric field concentration in the second insulating layer 325, and particularly, at the first triple point P1 and the second triple point P2.

However, due to the difference between the volume resistivities of the second insulating layer 325 and the first insulating layer 323, an electric field of the second insulating layer 325 is shifted to the first insulating layer 323 and thus the third triple point P3 at which factors formed of three different types of materials of different volume resistivities, including the first insulating layer 323, are in contact with one another may become an insulation weak part due to an electric field concentration therein.

To solve the above problem, the third triple point P3 may be formed to be spaced a certain distance from a curved side of the second electrode 322 facing the first electrode 321 in a direction opposite to the first electrode 321, and be formed farther from the first electrode 321 than the second electrode 321. When the electric field is shifted from the second insulating layer 325 to the first insulating layer 323, a relatively high electric field is applied to a portion of the first insulating layer 323 corresponding to a region of the second insulating layer 325 between the pair of second electrodes 322 according to the shapes of the first electrode 321 and the second electrodes 322, the difference between the volume resistivities of the first and second electrodes 321 and 322 and the second insulating layer 325, and the like.

Accordingly, the third triple point may be formed to be farther from the first electrode 321 than the second electrodes 322, and preferably, such that the distance t1 between the third triple point P3 and the first electrode 321 is greater than the distance t2 between the first electrode 321 and the second electrodes 322, so that a high electric field may not be applied to the third triple point.

The first insulating layer 323 at the third triple point and the interface between the second insulating layer 325 surrounding the first electrode 321 and the first insulating layer 323 may have a thickness satisfying Equation (3) below.

[Equation 3]

$$\frac{1.85 U_o}{D_{PMJ}} < BDV_{PMJ}$$

Here, Uo represents a rated voltage of the joint box with the joint sleeve 320, 1.85Uo represents a lightning impulse test voltage (a basic impulse insulation level (BIL)), $D_{PMJ}$ represents the thickness of the first insulating layer 323 at the first triple point and the interface between the second insulating layer 325 surrounding the first electrode 321 and the first insulating layer 323, and $BDV_{PMJ}$ represents a breakdown voltage of the first insulating layer 323.

That is, the first insulating layer 323 may be formed such that a value obtained by dividing the lightning impulse test voltage of the joint box by the thickness of the first insulating layer 323 is less than the breakdown voltage of the first insulating layer 323. In other words, the first insulating layer 323 may be formed to a thickness greater than a value obtained by dividing the lightning impulse test voltage $1.85U_o$ of the joint box by the breakdown voltage $BDV_{PMJ}$ of the first insulating layer 323.

The first insulating layer 323 has higher volume resistivity than that of the second insulating layer 325, and in particular, a higher electric field is applied to the first electrode 321 than that applied to the second insulating layer 325. When the thickness of the first insulating layer 323 to which a high electric field is applied is less than the value obtained by dividing the lightning impulse test voltage $1.85U_o$ of the joint box by the breakdown voltage $BDV_{PMJ}$ of the first insulating layer 323 as described above, an electric force line density at the first insulating layer 323 increases and thus dielectric breakdown may occur in the first insulating layer 323.

Therefore, in one embodiment of the present invention, the first insulating layer 323 may be formed to a thickness greater than the value obtained by dividing the lightning impulse test voltage 1.85Uo of the joint box by the breakdown voltage $BDV_{PMJ}$ of the first insulating layer 323, thereby preventing dielectric breakdown from occurring in the first insulating layer 323. For example, the first insulating layer 323 may be formed on the first electrode 321 such that a thickness thereof is three times or more that of the second insulating layer 325.

For example, in the joint sleeve 320 of the joint box for a cable according to the present invention, the first electrode 321 and the second electrode 322 may be molded by inserting a mold into a molding mold and injecting a conductive material into the mold, and thereafter, the first insulating layer 323 and the second insulating layer 325 may be formed by injecting a composition for control of an electrical conductivity and an insulating composition into the molding mold and curing the compositions. Alternatively, the second insulating layer 325 may be manufactured by applying the second insulating composition to surround at least a portion or an interface or region between the first electrode 321 and the second electrode 322 and the joint-box insulation part and/or the cable insulating layer and curing the second insulating composition.

[Examples]

1. Preparation examples

Joint boxes of examples each having volume resistivity shown in Table 1 below and a joint-box insulation part with the second insulating layer 325 of FIG. 3 and joint boxes of comparative examples each having volume resistivity shown in Table 1 below and a joint-box insulation part which is the same as those of the joint boxes of the examples except that no second insulating layer was included were prepared.

[Table 1]

|  | volume resistivity ($\Omega$m) | | | |
|---|---|---|---|---|
|  | example 1 | example 2 | comparative example 1 | comparative example 2 |
| volume resistivity (70 °C) of cable insulating layer | 8.70E+14 | 4.64E+14 | 8.70E+14 | 4.64E+14 |
| volume resistivity (70 °C) of first insulating layer | 1.69E+15 | 2.10E+15 | 1.69E+15 | 2.10E+15 |
| volume resistivity (70 °C) of second insulating layer | 9.14E+12 | 1.21E+13 | - | - |

2. Evaluation of equipotential line distribution and electric field value

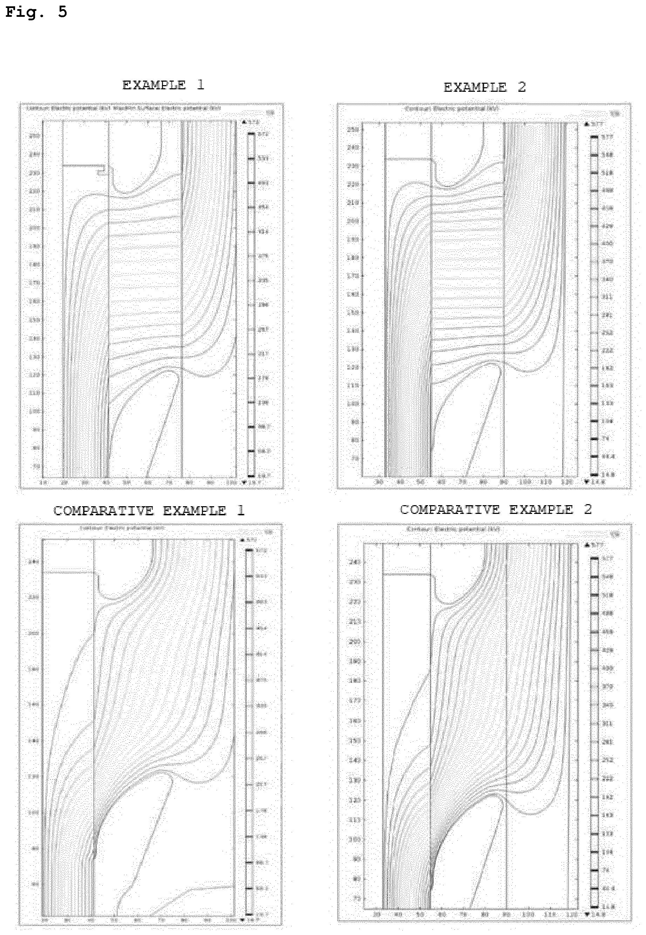

592 kV was applied to each of the joint boxes of the examples and the comparative examples and an equipotential line distribution in a space between a first electrode and a second electrode thereof was measured at 70 °C. A result of measuring an equipotential line distribution is as shown in FIG. 5 and an electric field value of each region is as shown in Table 2 below.

[Table 2]

| | Electric field value [kV/mm] | | |
|---|---|---|---|
| | first interface | triple point | second interface |
| example 1 | 1.1 | 2.5 | 8.5 |
| example 2 | 0.1 | 0.2 | 9.4 |
| comparative example 1 | 26.6 | 61.1 | 17.1 |
| comparative example 2 | 23.4 | 53.6 | 16.5 |
| - first interface: insulating layer of cable-interface of first insulating layer<br>- triple point: insulating layer of cable-first insulating layer-second electrode<br>- second interface: first insulating layer-first electrode | | | |

As illustrated in FIG. 5, in the joint boxes each having the second insulating layer of the examples of the present invention, an equipotential line interval between the first electrode and the second electrode was not small and thus a local electric field concentration did not occur, whereas in the joint boxes each having no second insulating layer of the comparative examples, an equipotential line interval was small and thus there was a region in which a local electric field concentration may occur structurally. As shown in Table 2, an electric field was sufficiently relieved in regions of the joint boxes of the examples in which an electric field concentration may occur structurally, but an electric field concentration occurred in regions of the joint boxes of the comparative examples in which a local electric field concentration may occur structurally.

**Claims**

1. An ultra-high-voltage DC power cable system including a joint box, for an ultra-high-voltage direct-current (DC) power cable (200), and a pair of ultra-high-voltage DC power cables each having a conductor (210), an inner semiconducting layer (212) surrounding the conductor (210), an insulating layer (214) surrounding the inner semiconducting layer (212), and an outer semiconducting layer (216) surrounding the insulating layer (214), the joint box (300) comprising:

   a first electrode (321') having left and right round ends in a lengthwise direction of the joint box;
   a pair of second electrodes (322) configured to face each other while being spaced a certain distance from the first electrode to the left or right in the lengthwise direction of the joint box (300), and are in contact with the outer semiconducting layer (216) of the power cable (200) to be electrically connected thereto; and
   a joint sleeve configured to surround the first electrode (321') and the second electrodes (322), formed of an elastic material that contracts at room temperature, and provided in the form of a hollow sleeve with a through hole in the lengthwise direction,
   wherein the joint sleeve comprises a joint-box insulation part (323') configured to prevent leakage of current to the outside of the joint box (300),
   wherein the joint-box insulation part (323') comprises a first insulating layer (323) and **characterised in that** the joint-box insulation part comprises a second insulating layer (325),
   wherein the second insulating layer (325) has lower volume resistivity than that of the first insulating layer (323), and
   the second insulating layer (325) is formed between the first insulation layer and the insulation layer and surrounds at least one of an innermost side of the joint sleeve, an interface between the first electrode (321') and the joint-box insulation part (323'), or an interface between the second electrode (322) and the joint-box insulation part (323').

2. The ultra-high-voltage DC power cable system of claim 1, wherein a thickness of the first insulating layer (323) satisfies the following Equation (1) :

[Equation 1]

$$\frac{1.85 U_O}{D_{PMJ}} < BDV_{PMJ}$$

wherein $U_O$ represents a rated voltage of the joint box (300) for an ultra-high-voltage DC power cable (200),
1.85Uo represents a lightning impulse test voltage which is a basic impulse insulation level (BIL),
$D_{PMJ}$ represents a thickness of the first insulating layer (323) on the first electrode (321), and
$BDV_{PMJ}$ represents a breakdown voltage of the first insulating layer (323).

**3.** The ultra-high-voltage DC power cable system of claim 1, wherein the second insulating layer (322) is formed to cover both the first electrode (321') and the second electrode (322) such that an interface between the first insulating layer (323) and the second insulating layer (325) are not in contact with the first electrode (321) and the second electrode (322).

**4.** The ultra-high-voltage DC power cable system of any one of claims 1 to 3, wherein a vertical distance of the second electrode (322) from the innermost side of the joint sleeve gradually increases toward the first electrode (321').

**5.** The ultra-high-voltage DC power cable system of claim 4, further comprising:

a joint-box shielding layer configured to shield an electric field leaking outside the joint box, the joint-box shielding layer being provided outside the joint sleeve; and
a triple point at which the first insulating layer (323), the second insulating layer (325) and the joint-box shielding layer (323') are in contact with one another,
wherein a distance between the first electrode (321') and the triple point is greater than that between the first electrode (321') and the second electrode (322).

**6.** The ultra-high-voltage DC power cable system of claim 1, wherein the first insulating layer (323; and the second insulating layer (325) each have volume resistivity of $1\times10^{19}$ to $1\times10^{18}$ $\Omega$cm, and the volume resistivity of the second insulating layer (325) is ten times or more lower than that of the first insulating layer (323).

**7.** The ultra-high-voltage DC power cable system of claim 1, wherein the second insulating layer (325) is formed of a second insulating composition containing a base resin and a resistivity control additive.

**8.** The ultra-high-voltage DC power cable system of claim 7, wherein the base resin comprises at least one type of rubber selected from the group consisting of liquid silicone rubber (LSR), fluororubber (FR), styrene-butadiene rubber (SBR), nitrile-butadiene rubber (NBR) and chloroprene rubber (CR).

**9.** The ultra-high-voltage DC power cable system of claim 7, wherein the resistivity control additive comprises a glycol-based organic conductive filler.

**10.** The ultra-high-voltage DC power cable system of claim 9, wherein the glycol-based organic conductive filler comprises polyglycol ether.

**11.** The ultra-high-voltage DC power cable system of claim 10, wherein an amount of the organic conductive filler is 0.1 to 5% by weight, based on total weight of the insulating composition.

**12.** The ultra-high-voltage DC power cable system of claim 9, wherein the resistivity control additive further comprises an inorganic conductive filler.

**Patentansprüche**

**1.** Ultrahochspannungsgleichstromkabelsystem, umfassend ein Muffengehäuse für ein Ultrahochspannungsgleichstromkabel (Ultrahochspannung-DC-Stromkabel) (200) und umfassend ein Paar Ultrahochspannungsgleichstromkabel, von denen jedes einen Leiter (210), eine den Leiter (210) umgebende innere halbleitende Schicht (212), eine die innere halbleitende Schicht (212) umgebende isolierende Schicht (214) und eine die isolierende Schicht (214) umgebende äußere halbleitende Schicht (216) aufweist, wobei das Muffengehäuse (300) Folgendes umfasst:

eine erste Elektrode (321') mit einem linken und einem rechten runden Ende in einer Längsrichtung des Muffengehäuses;

ein Paar zweite Elektroden (322), die dazu ausgebildet sind, einander zugewandt zu sein, während sie von der ersten Elektrode nach links oder rechts in der Längsrichtung des Muffengehäuses (300) in einem bestimmten Abstand beabstandet sind, und die mit der äußeren halbleitenden Schicht (216) des Stromkabels (200) in Kontakt stehen, um elektrisch damit verbunden zu sein; und

eine Verbindungshülse, die dazu ausgebildet ist, die erste Elektrode (321') und die zweiten Elektroden (322) zu umgeben, die aus einem sich bei Raumtemperatur zusammenziehenden elastischen Material ist und die in Form einer hohlen Hülse mit einem Durchgangsloch in der Längsrichtung versehen ist,

wobei die Verbindungshülse ein Muffengehäuse-Isolierteil (323') umfasst, das dazu ausgebildet ist, ein Austreten von Strom zur Außenseite des Muffengehäuses (300) zu verhindern,

wobei das Muffengehäuse-Isolierteil (323') eine erste isolierende Schicht (323) umfasst, **dadurch gekennzeichnet, dass**

das Muffengehäuse-Isolierteil eine zweite isolierende Schicht (325) umfasst,

wobei die zweite isolierende Schicht (325) einen geringeren spezifischen Durchgangswiderstand aufweist als die erste isolierende Schicht (323),

und

wobei die zweite isolierende Schicht (325) zwischen der ersten Isolierschicht und der Isolierschicht ausgebildet ist und eine innerste Seite der Verbindungshülse und/oder eine Schnittstelle zwischen der ersten Elektrode (321') und dem Muffengehäuse-Isolierteil (323') und/oder eine Schnittstelle zwischen der zweiten Elektrode (322) und dem Muffengehäuse-Isolierteil (323') umgibt.

2. Ultrahochspannungsgleichstromkabelsystem nach Anspruch 1, wobei eine Dicke der ersten isolierenden Schicht (323) die folgende Gleichung (1) erfüllt:

[Gleichung 1]

$$\frac{1.85U_O}{D_{PMJ}} < BDV_{PMJ}$$

wobei Uo für eine Bemessungsspannung des Muffengehäuses (300) für ein Ultrahochspannungsgleichstromkabel (200) steht,

wobei 1,85Uo für eine Blitzstoß-Prüfspannung steht, die ein Stoßisolationspegel [Englisch: BIL (*basic impulse insulation level*)] ist,

wobei $D_{PMJ}$ für eine Dicke der ersten isolierenden Schicht (323) an der ersten Elektrode (321) steht, und

wobei $BDV_{PMJ}$ für eine Durchschlagspannung der ersten isolierenden Schicht (323) steht.

3. Ultrahochspannungsgleichstromkabelsystem nach Anspruch 1, wobei die zweite isolierende Schicht (322) dazu ausgebildet ist, sowohl die erste Elektrode (321') als auch die zweite Elektrode (322) derart zu ummanteln, dass eine Schnittstelle zwischen der ersten isolierenden Schicht (323) und der zweiten isolierenden Schicht (325) nicht in Kontakt mit der ersten Elektrode (321) und der zweiten Elektrode (322) steht.

4. Ultrahochspannungsgleichstromkabelsystem nach einem der Ansprüche 1 bis 3, wobei sich ein vertikaler Abstand der zweiten Elektrode (322) von der innersten Seite der Verbindungshülse in Richtung der ersten Elektrode (321') stufenweise vergrößert.

5. Ultrahochspannungsgleichstromkabelsystem nach Anspruch 4, des Weiteren umfassend:

eine Muffengehäuse-Abschirmschicht, die dazu ausgebildet ist, ein elektrisches Feld, das nach außen aus dem Muffengehäuse austritt, abzuschirmen, wobei die Muffengehäuse-Abschirmschicht außerhalb der Verbindungshülse vorgesehen ist; und

ein Tripelpunkt, an dem die erste insolierende Schicht (323), die zweite isolierende Schicht (325) und die Muffengehäuse-Abschirmschicht (323') miteinander in Kontakt stehen,

wobei ein Abstand zwischen der ersten Elektrode (321') und dem Tripelpunkt größer als der zwischen der ersten Elektrode (321') und der zweiten Elektrode (322) ist.

6. Ultrahochspannungsgleichstromkabelsystem nach Anspruch 1, wobei die erste isolierende Schicht (323) und die zweite isolierende Schicht (325) jeweils einen spezifischen Durchgangswiderstand von $1 \times 10^{14}$ bis $1 \times 10^{18}$ Ωcm aufweisen, und wobei der spezifische Durchgangswiderstand der zweiten isolierenden Schicht (325) zehnmal oder mehr niedriger als der der ersten isolierenden Schicht (323) ist.

7. Ultrahochspannungsgleichstromkabelsystem nach Anspruch 1, wobei die zweite isolierende Schicht (325) aus einer zweiten isolierenden Zusammensetzung ausgebildet ist, die ein Grundharz und einen Resistivitätskontrollzusatzstoff enthält.

8. Ultrahochspannungsgleichstromkabelsystem nach Anspruch 7, wobei das Grundharz mindestens eine Art Kautschuk umfasst, der aus der Gruppe ausgewählt ist, die aus Flüssigsilikonkautschuk (LSR), Fluorkautschuk (FKM), StyrolButadien-Kautschuk (SBR), Acrylnitril-Butadien-Kautschuk (NBR) und Chloropren-Kautschuk (CR) besteht.

9. Ultrahochspannungsgleichstromkabelsystem nach Anspruch 7, wobei der Resistivitätskontrollzusatzstoff einen organischen, leitfähigen Füllstoff auf Glykolbasis umfasst.

10. Ultrahochspannungsgleichstromkabelsystem nach Anspruch 9, wobei der organische, leitfähige Füllstoff auf Glykolbasis Polyglykolether umfasst.

11. Ultrahochspannungsgleichstromkabelsystem nach Anspruch 10, wobei eine Menge des organischen, leitfähigen Füllstoffs, bezogen auf das Gesamtgewicht der isolierenden Zusammensetzung, 0,1 bis 5 Gew.-% beträgt.

12. Ultrahochspannungsgleichstromkabelsystem nach Anspruch 9, wobei der Resistivitätskontrollzusatzstoff des Weiteren einen anorganischen, leitenden Füllstoff umfasst.


**Revendications**

1. Système de câble électrique à courant continu à ultra-haute tension comprenant un corps de boîte pour un câble électrique (200) à courant continu (CC) à ultra-haute tension et comprenant une paire de câbles électriques à courant continu à ultra-haute tension dont chacun a un conducteur (210), une couche (212) semi-conductrice intérieure entourant le conducteur (210), une couche isolante (214) entourant la couche (212) semi-conductrice intérieure et une couche (216) semi-conductrice extérieure entourant la couche isolante (214), le corps de boîte (300) comprenant :

   une première électrode (321') ayant des extrémités rondes gauche et droite dans une direction longitudinale du corps de boîte ;
   une paire de deuxièmes électrodes (322) qui sont configurées pour être orientées l'une vers l'autre tout en étant espacées d'une certaine distance de la première électrode vers la gauche ou vers la droite dans la direction longitudinale du corps de boîte (300), et qui sont en contact avec la couche (216) semi-conductrice extérieure du câble électrique (200) pour être connecté électriquement à celle-ci ; et
   un manchon de jonction qui est configuré pour entourer la première électrode (321') et les deuxièmes électrodes (322), qui est fait d'un matériau élastique qui se contracte à température ambiante, et qui est sous la forme d'un manchon creux pourvu d'un trou traversant dans la direction longitudinale,
   dans lequel le manchon de jonction comprend une partie d'isolation (323') de corps de boîte configurée pour empêcher la fuite de courant vers l'extérieur du corps de boîte (300),
   dans lequel la partie d'isolation (323') de corps de boîte comprend une première couche isolante (323), **caractérisé en ce que**
   la partie d'isolation de corps de boîte comprend une deuxième couche isolante (325),
   dans lequel la deuxième couche isolante (325) a une résistivité volumique inférieure à celle de la première couche isolante (323),
   et

dans lequel la deuxième couche isolante (325) est formée entre la première couche d'isolation et la couche d'isolation et entoure un côté le plus intérieur du manchon de jonction et/ou une interface entre la première électrode (321') et la partie d'isolation (323') de corps de boîte et/ou une interface entre la deuxième électrode (322) et la partie d'isolation (323') de corps de boîte.

2. Système de câble électrique à courant continu à ultra-haute tension selon la revendication 1, dans lequel une épaisseur de la première couche isolante (323) satisfait à l'équation (1) suivante :

[Équation 1]

$$\frac{1.85 U_O}{D_{PMJ}} < BDV_{PMJ}$$

dans lequel Uo représente une tension assignée du corps de boîte (300) pour un câble électrique (200) à courant continu à ultra-haute tension,
dans lequel 1,85Uo représente une tension d'essai de choc de foudre qui est un niveau d'isolement au choc [anglais : BIL (*basic impulse insulation level*)], dans lequel $D_{PMJ}$ représente une épaisseur de la première couche isolante (323) sur la première électrode (321), et
dans lequel $BDV_{PMJ}$ représente une tension de claquage de la première couche isolante (323).

3. Système de câble électrique à courant continu à ultra-haute tension selon la revendication 1, dans lequel la deuxième couche isolante (322) est formée pour couvrir autant la première électrode (321') que la deuxième électrode (322) de telle manière qu'une interface entre la première couche isolante (323) et la deuxième couche isolante (325) n'est pas en contact avec la première électrode (321) et la deuxième électrode (322).

4. Système de câble électrique à courant continu à ultra-haute tension selon l'une quelconque des revendications 1 à 3, dans lequel une distance verticale de la deuxième électrode (322) augmente graduellement à partir du côté le plus intérieur du manchon de jonction vers la première électrode (321').

5. Système de câble électrique à courant continu à ultra-haute tension selon la revendication 4, comprenant en outre :

une couche de blindage du corps de boîte configurée pour blinder un champ électrique fuyant vers l'extérieur du corps de boîte, la couche de blindage du corps de boîte étant prévue à l'extérieur du manchon de jonction ; et
un point triple auquel la première couche isolante (323), la deuxième couche isolante (325) et la couche (323') de blindage du corps de boîte sont en contact l'une avec l'autre,
dans lequel une distance entre la première électrode (321') et le point triple est supérieure à celle entre la première électrode (321') et la deuxième électrode (322).

6. Système de câble électrique à courant continu à ultra-haute tension selon la revendication 1, dans lequel la première couche isolante (323) et la deuxième couche isolante (325) ont chacune une résistivité volumique de $1 \times 10^{14}$ à $1 \times 10^{18}$ $\Omega$cm, et
dans lequel la résistivité volumique de la deuxième couche isolante (325) est dix fois ou plus inférieure à celle de la première couche isolante (323).

7. Système de câble électrique à courant continu à ultra-haute tension selon la revendication 1, dans lequel la deuxième couche isolante (325) est formée d'une deuxième composition isolante qui contient une résine de base et un additif de contrôle de la résistivité.

8. Système de câble électrique à courant continu à ultra-haute tension selon la revendication 7, dans lequel la résine de base comprend au moins un type de caoutchouc choisi dans le groupe qui se compose de caoutchouc de silicone liquide (LSR), de caoutchouc fluoré (FKM), de caoutchouc styrène-butadiène (SBR), de caoutchouc nitrile-butadiène (NBR) et de caoutchouc de chloroprène (CR).

9. Système de câble électrique à courant continu à ultra-haute tension selon la revendication 7, dans lequel l'additif de contrôle de la résistivité comprend une charge conductrice organique à base de glycol.

**10.** Système de câble électrique à courant continu à ultra-haute tension selon la revendication 9, dans lequel la charge conductrice organique à base de glycol comprend de l'éther polyglycole.

**11.** Système de câble électrique à courant continu à ultra-haute tension selon la revendication 10, dans lequel une quantité de la charge conductrice organique est de 0,1 à 5 % en poids par rapport au poids total de la composition isolante.

**12.** Système de câble électrique à courant continu à ultra-haute tension selon la revendication 9, dans lequel l'additif de contrôle de la résistivité comprend en outre une charge conductrice inorganique.

Fig. 1

Fig. 2

Fig. 3

Fig. 4

(a)

(b)

VOLUME RESISTIVITY OF / VOLUME RESISTIVITY OF
CABLE INSULATING LAYER / SECOND INSULATING LAYER

VOLUME RESISTIVITY OF
SECOND INSULATING LAYER [Ω·cm]

Fig. 5

EXAMPLE 1

EXAMPLE 2

COMPARATIVE EXAMPLE 1

COMPARATIVE EXAMPLE 2

**EP 3 611 737 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20160063219 A
- KR 20160088780 A